# EUROPEAN PATENT APPLICATION

(11) **EP 2 983 303 A1**
(43) Date of publication of application: **10.02.2016**
(21) Application number: 13883287.8
(22) Date of filing: 25.04.2013
(51) Int. Cl.: H04B 7/12

(54) **METHOD AND DEVICE FOR TRANSMITTING DOWNLINK CONTROL INFORMATION**

(71) Applicant: Huawei Technologies Co., Ltd., Longgang District Shenzhen, Guangdong 518129 (CN)
(72) Inventor: LV, Yongxia, Shenzhen Guangdong 518129 (CN); ZHANG, Wen, Shenzhen Guangdong 518129 (CN); JI, Tong, Shenzhen Guangdong 518129 (CN)
(74) Representative: Maiwald Patentanwalts GmbH
(86) International application number: PCT/CN2013/074707
(87) International publication number: WO 2014/172870

(57) **Abstract**

Embodiments of the present invention provide a method and a device for transmitting downlink control information, where the method for transmitting downlink control information includes: determining, by a base station, duration information, where the duration information is used to indicate a duration that downlink control information to be sent from the base station to a user equipment needs to occupy; and sending, by the base station, the duration information to the user equipment, and sending the downlink control information to the user equipment, so that the user equipment receives the downlink control information according to the duration information. An objective of flexibly enhancing coverage can be achieved by using the method and the device for transmitting downlink control information that are provided in the embodiments of the present invention.

## Description

### TECHNICAL FIELD

Embodiments of the present invention relate to communications technologies, and in particular, to a method and a device for transmitting downlink control information.

### BACKGROUND

With the continuous development of an Internet of Things technology, a quantity of Internet of Things devices becomes enormous. These Internet of Things devices are tightly integrated with a wireless communications technology, and obtain data or report data to a control center by using a wireless connection.

In an actual application, some Internet of Things devices, for example, an electricity meter, may be installed in a place with relatively poor coverage, such as a basement. For these Internet of Things devices, it is required that coverage is increased by at least 20 dB to meet a communication requirement. For different physical channels, compensation values for enhancing coverage are different. Therefore, a solution that can flexibly enhance coverage according to a need of an environment in which an Internet of Things device is located needs urgently to be put forward.

### SUMMARY

Embodiments of the present invention provide a method and a device for transmitting downlink control information, to achieve an objective of flexibly enhancing coverage.

According to a first aspect, an embodiment of the present invention provides a method for transmitting downlink control information, including:
determining, by a base station, duration information, where the duration information is used to indicate a duration that downlink control information to be sent from the base station to a user equipment needs to occupy; and
sending, by the base station, the duration information to the user equipment, and sending the downlink control information to the user equipment, so that the user equipment receives the downlink control information according to the duration information.

In a first possible implementation manner, the downlink control information does not include preset field information, where the preset field information is pre-configured by a system; or the preset field information is configured by means of higher layer signaling.

With reference to the first aspect or the first possible implementation manner of the first aspect, in a second possible implementation manner, the downlink control information includes at least one of the following information:
a quantity of modulation symbols, a time domain spreading factor, time of a single transmission, a quantity of transmission times, and a transport block size.

With reference to the first aspect or the first or the second possible implementation manner of the first aspect, in a third possible implementation manner, if the duration that the downlink control information needs to occupy and that is indicated by the duration information is multiple subframes, the sending, by the base station, the downlink control information to the user equipment includes:
sending, by the base station, the downlink control information repeatedly in the multiple subframes, where each subframe in the multiple subframes includes entire content of the downlink control information; or
sending, by the base station, the downlink control information that is divided in the multiple subframes, where each subframe in the multiple subframes includes only partial content of the downlink control information.

With reference to the first aspect or any one of the first to the third possible implementation manners of the first aspect, in a fourth possible implementation manner, the sending, by the base station, the duration information to the user equipment includes:
sending, by the base station, the duration information to the user equipment on a preset time-frequency resource, where the preset time-frequency resource is used to bear the duration information.

With reference to the fourth possible implementation manner of the first aspect, in a fifth possible implementation manner, the sending, by the base station, the duration information to the user equipment on a preset time-frequency resource includes:
sending, by the base station, the duration information to the user equipment on the preset time-frequency resource in a frequency domain spread spectrum manner.

With reference to the fourth or the fifth possible implementation manner of the first aspect, in a sixth possible implementation manner, the preset time-frequency resource is further used to bear downlink common control information, where the downlink common control information includes at least one of the following: a system information block, a random access response, and a paging message.

With reference to any one of the fourth to the sixth possible implementation manners of the first aspect, in a seventh possible implementation manner, the preset time-frequency resource is further used to bear a quantity of resource blocks occupied by the downlink control information.

With reference to the first aspect or any one of the first to the seventh possible implementation manners of the first aspect, in an eighth possible implementation manner, before the sending, by the base station, the duration information to the user equipment, the method further includes:
scrambling, by the base station, the duration information by using a cell radio network temporary identifier C-RNTI of the user equipment, to obtain scrambled duration information; or
scrambling, by the base station, the duration information by using a preset common sequence, to obtain scrambled duration information; and
the sending, by the base station, the duration information to the user equipment includes:
   sending, by the base station, the scrambled duration information to the user equipment.

According to a second aspect, an embodiment of the present invention provides a method for transmitting downlink control information, including:
receiving, by a user equipment, duration information sent from a base station, where the duration information is used to indicate a duration that downlink control information to be sent to the user equipment needs to occupy; and
receiving, by the user equipment according to the duration information, the downlink control information sent from the base station.

In a first possible implementation manner, the downlink control information does not include preset field information, where the preset field information is pre-configured by a system; or the preset field information is configured by means of higher layer signaling.

With reference to the second aspect or the first possible implementation manner of the second aspect, in a second possible implementation manner, the downlink control information includes at least one of the following information:
a quantity of modulation symbols, a time domain spreading factor, time of a single transmission, a quantity of transmission times, and a transport block size.

With reference to the second aspect or the first or the second possible implementation manner of the second aspect, in a third possible implementation manner, the receiving, by a user equipment, duration information sent from a base station includes:
receiving, by the user equipment, the duration information sent on a preset time-frequency resource by the base station, where the preset time-frequency resource is used to bear the duration information.

With reference to the third possible implementation manner of the second aspect, in a fourth possible implementation manner, the receiving, by the user equipment, the duration information sent on a preset time-frequency resource by the base station includes:
receiving, by the user equipment, the duration information sent on the preset time-frequency resource in a frequency domain spread spectrum manner by the base station.

With reference to the third or the fourth possible implementation manner of the second aspect, in a fifth possible implementation manner, the preset time-frequency resource is further used to bear downlink common control information, where the downlink common control information includes at least one of the following: a system information block, a random access response, and a paging message.

With reference to any one of the third to the fifth possible implementation manners of the second aspect, in a sixth possible implementation manner, the preset time-frequency resource is further used to bear a quantity of resource blocks occupied by the downlink control information.

With reference to the second aspect or any one of the first to the sixth possible implementation manners of the second aspect, in a seventh possible implementation manner, the receiving, by a user equipment, duration information sent from a base station includes:
receiving, by the user equipment, scrambled duration information sent from the base station, where the scrambled duration information is:
   scrambled duration information obtained by the base station by scrambling the duration information by using a cell radio network temporary identifier C-RNTI of the user equipment; or
   scrambled duration information obtained by the base station by scrambling the duration information by using a preset common sequence.

According to a third aspect, an embodiment of the present invention provides a base station, including:
a processing unit, configured to determine duration information, where the duration information is used to indicate a duration that downlink control information to be sent from the base station to a user equipment needs to occupy; and
a sending unit, configured to send the duration information determined by the processing unit to the user equipment, and send the downlink control information to the user equipment, so that the user equipment receives the downlink control information according to the duration information.

In a first possible implementation manner, the downlink control information does not include preset field information, where the preset field information is pre-configured by a system; or the preset field information is configured by means of higher layer signaling.

With reference to the third aspect or the first possible implementation manner of the third aspect, in a second possible implementation manner, the downlink control information includes at least one of the following information:
a quantity of modulation symbols, a time domain spreading factor, time of a single transmission, a quantity of transmission times, and a transport block size.

With reference to the third aspect or the first or the second possible implementation manner of the third aspect, in a third possible implementation manner, if the duration that the downlink control information needs to occupy and that is indicated by the duration information is multiple subframes, the sending unit is specifically configured to send the downlink control information repeatedly in the multiple subframes, where each subframe in the multiple subframes includes entire content of the downlink control information; or the sending unit is specifically configured to send the downlink control information that is divided in the multiple subframes, where each subframe in the multiple subframes includes only partial content of the downlink control information.

With reference to the third aspect or any one of the first to the third possible implementation manners of the third aspect, in a fourth possible implementation manner, the sending unit is specifically configured to send the duration information to the user equipment on a preset time-frequency resource, where the preset time-frequency resource is used to bear the duration information.

With reference to the fourth possible implementation manner of the third aspect, in a fifth possible implementation manner, the sending unit is specifically configured to send the duration information to the user equipment on the preset time-frequency resource in a frequency domain spread spectrum manner.

With reference to the fourth or the fifth possible implementation manner of the third aspect, in a sixth possible implementation manner, the preset time-frequency resource is further used to bear downlink common control information, where the downlink common control information includes at least one of the following: a system information block, a random access response, and a paging message.

With reference to any one of the fourth to the sixth possible implementation manners of the third aspect, in a seventh possible implementation manner, the preset time-frequency resource is further used to bear a quantity of resource blocks occupied by the downlink control information.

With reference to the third aspect or any one of the first to the seventh possible implementation manners of the third aspect, in an eighth possible implementation manner, the processing unit is further configured to scramble the duration information by using a cell radio network temporary identifier C-RNTI of the user equipment, to obtain scrambled duration information; or scramble the duration information by using a preset common sequence, to obtain scrambled duration information; and
that the sending unit is configured to send the duration information determined by the processing unit to the user equipment includes that:
the sending unit is configured to send the scrambled duration information to the user equipment.

According to a fourth aspect, an embodiment of the present invention provides a user equipment, including:
a first receiving unit, configured to receive duration information sent from a base station, where the duration information is used to indicate a duration that downlink control information to be sent to the user equipment needs to occupy; and
a second receiving unit, configured to receive, according to the duration information received by the first receiving unit, the downlink control information sent from the base station.

In a first possible implementation manner, the downlink control information does not include preset field information, where the preset field information is pre-configured by a system; or the preset field information is configured by means of higher layer signaling.

With reference to the fourth aspect or the first possible implementation manner of the fourth aspect, in a second possible implementation manner, the downlink control information includes at least one of the following information:
a quantity of modulation symbols, a time domain spreading factor, time of a single transmission, a quantity of transmission times, and a transport block size.

With reference to the fourth aspect or the first or the second possible implementation manner of the fourth aspect, in a third possible implementation manner, the first receiving unit is specifically configured to receive the duration information sent on a preset time-frequency resource by the base station, where the preset time-frequency resource is used to bear the duration information.

With reference to the third possible implementation manner of the fourth aspect, in a fourth possible implementation manner, the first receiving unit is specifically configured to receive the duration information sent on the preset time-frequency resource in a frequency domain spread spectrum manner by the base station.

With reference to the third or the fourth possible implementation manner of the fourth aspect, in a fifth possible implementation manner, the preset time-frequency resource is further used to bear downlink common control information, where the downlink common control information includes at least one of the following: a system information block, a random access response, and a paging message.

With reference to any one of the third to the fifth possible implementation manners of the fourth aspect, in a sixth possible implementation manner, the preset time-frequency resource is further used to bear a quantity of resource blocks occupied by the downlink control information.

With reference to the fourth aspect or any one of the first to the sixth possible implementation manners of the fourth aspect, in a seventh possible implementation manner, the first receiving unit is specifically configured for the user equipment to receive scrambled duration information sent from the base station, where the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.

According to a fifth aspect, an embodiment of the present invention provides a base station, including:
a processor, configured to determine duration information, where the duration information is used to indicate a duration that downlink control information to be sent from the base station to a user equipment needs to occupy; and
a transmitter, configured to send the duration information determined by the processor to the user equipment, and send the downlink control information to the user equipment, so that the user equipment receives the downlink control information according to the duration information.

In a first possible implementation manner, the downlink control information does not include preset field information, where the preset field information is pre-configured by a system; or the preset field information is configured by means of higher layer signaling.

With reference to the fifth aspect or the first possible implementation manner of the fifth aspect, in a second possible implementation manner, the downlink control information includes at least one of the following information:
a quantity of modulation symbols, a time domain spreading factor, time of a single transmission, a quantity of transmission times, and a transport block size.

With reference to the fifth aspect or the first or the second possible implementation manner of the fifth aspect, if the duration that the downlink control information needs to occupy and that is indicated by the duration information is multiple subframes, the transmitter is specifically configured to send the downlink control information repeatedly in the multiple subframes, where each subframe in the multiple subframes includes entire content of the downlink control information; or the transmitter is specifically configured to send the downlink control information that is divided in the multiple subframes, where each subframe in the multiple subframes includes only partial content of the downlink control information.

With reference to the fifth aspect or any one of the first to the third possible implementation manners of the fifth aspect, in a fourth possible implementation manner, the transmitter is specifically configured to send the duration information to the user equipment on a preset time-frequency resource, where the preset time-frequency resource is used to bear the duration information.

With reference to the fourth possible implementation manner of the fifth aspect, in a fifth possible implementation manner, the transmitter is specifically configured to send the duration information to the user equipment on the preset time-frequency resource in a frequency domain spread spectrum manner.

With reference to the fourth or the fifth possible implementation manner of the fifth aspect, in a sixth possible implementation manner, the preset time-frequency resource is further used to bear downlink common control information, where the downlink common control information includes at least one of the following: a system information block, a random access response, and a paging message.

With reference to any one of the fourth to the sixth possible implementation manners of the fifth aspect, in a seventh possible implementation manner, the preset time-frequency resource is further used to bear a quantity of resource blocks occupied by the downlink control information.

With reference to the fifth aspect or any one of the first to the seventh possible implementation manners of the fifth aspect, in an eighth possible implementation manner, the processor is further configured to scramble the duration information by using a cell radio network temporary identifier C-RNTI of the user equipment, to obtain scrambled duration information; or scramble the duration information by using a preset common sequence, to obtain scrambled duration information; and
that the transmitter is configured to send the duration information determined by the processor to the user equipment includes that:
the transmitter is configured to send the scrambled duration information to the user equipment.

According to a sixth aspect, an embodiment of the present invention provides a user equipment, including:
a first receiver, configured to receive duration information sent from a base station, where the duration information is used to indicate a duration that downlink control information to be sent to the user equipment needs to occupy; and
a second receiver, configured to receive, according to the duration information received by the first receiver, the downlink control information sent from the base station.

In a first possible implementation manner, the downlink control information does not include preset field information, where the preset field information is pre-configured by a system; or the preset field information is configured by means of higher layer signaling.

With reference to the sixth aspect or the first possible implementation manner of the sixth aspect, in a second possible implementation manner, the downlink control information includes at least one of the following information:
a quantity of modulation symbols, a time domain spreading factor, time of a single transmission, a quantity of transmission times, and a transport block size.

With reference to the sixth aspect or the first or the second possible implementation manner of the sixth aspect, in a third possible implementation manner, the first receiver is specifically configured to receive the duration information sent on a preset time-frequency resource by the base station, where the preset time-frequency resource is used to bear the duration information.

With reference to the third possible implementation manner of the sixth aspect, in a fourth possible implementation manner, the first receiver is specifically configured to receive the duration information sent on the preset time-frequency resource in a frequency domain spread spectrum manner by the base station.

With reference to the third or the fourth possible implementation manner of the sixth aspect, in a fifth possible implementation manner, the preset time-frequency resource is further used to bear downlink common control information, where the downlink common control information includes at least one of the following: a system information block, a random access response, and a paging message.

With reference to any one of the third to the fifth possible implementation manners of the sixth aspect, in a sixth possible implementation manner, the preset time-frequency resource is further used to bear a quantity of resource blocks occupied by the downlink control information.

With reference to the sixth aspect or any one of the first to the sixth possible implementation manners of the sixth aspect, in a seventh possible implementation manner, the first receiver is specifically configured for the user equipment to receive scrambled duration information sent from the base station, where the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.

According to the method and the device for transmitting downlink control information that are provided in embodiments of the present invention, a base station may determine a coverage enhancing need according to a network status of an environment in which a user equipment is located, determine a duration occupied for sending downlink control information to the user equipment, send the downlink control information to the user equipment in the duration, and notify the user equipment of the duration occupied for sending the downlink control information, so that the user equipment can successfully receive the downlink control information, thereby achieving an objective of flexibly enhancing coverage.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a first method for transmitting downlink control information according to an embodiment of the present invention;
FIG. 2 is a flowchart of a second method for transmitting downlink control information according to an embodiment of the present invention;
FIG. 3 is a flowchart of a third method for transmitting downlink control information according to an embodiment of the present invention;
FIG. 4 is a schematic structural diagram of a first base station according to an embodiment of the present invention;
FIG. 5 is a schematic structural diagram of a first user equipment according to an embodiment of the present invention;
FIG. 6 is a schematic structural diagram of a second base station according to an embodiment of the present invention; and
FIG. 7 is a schematic structural diagram of a second user equipment according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions provided by the embodiments of the present invention may be applied to various wireless communications networks, such as: a Global System for Mobile Communications (global system for mobile communication, GSM for short), a Code Division Multiple Access (code division multiple access, CDMA for short) system, a Wideband Code Division Multiple Access (wideband code division multiple access, WCDMA for short) system, a Universal Mobile Telecommunications System (universal mobile telecommunication system, UMTS for short), a general packet radio service (general packet radio service, GPRS for short), a Long Term Evolution (long term evolution, LTE for short) system, a Long Term Evolution Advanced (long term evolution advanced, LTE-A for short) system, and a Worldwide Interoperability for Microwave Access (worldwide interoperability for microwave access, WiMAX for short) system. The terms "network" and "system" may be interchanged.

In the embodiments of the present invention, a base station (base station, BS for short) may be a device in communication with a user equipment (user equipment, UE for short) or another communication station such as a relay station, and may provide communication coverage for a specific physical area. For example, the base station may be specifically a base transceiver station (Base Transceiver Station, BTS for short) or a base station controller (Base Station Controller, BSC for short) in GSM or CDMA; or may be a node B (Node B, NB for short) in UMTS or a radio network controller (Radio Network Controller, RNC for short) in UMTS; or may be further an evolved NodeB (Evolutional Node B, ENB or eNodeB for short) in LTE; or may be another access network device providing an access service in a wireless communications network, which is not limited in the present invention.

In the embodiments of the present invention, the UEs may be distributed in the whole wireless network, and each UE may be static or mobile. The UE may be referred to as a terminal (terminal), a mobile station (mobile station), a subscriber unit (subscriber unit), a station (station), or the like. The UE may be a cellular phone (cellular phone), a personal digital assistant (personal digital assistant, PDA for short), a wireless modem (modem), a wireless communications device, a handheld device (handheld), a laptop computer (laptop computer), a cordless phone (cordless phone), a wireless local loop (wireless local loop, WLL for short) station, or the like. Alternatively, the UE may also be various devices that support machine-type communication (machine-type communication, MTC for short), for example, may be a device such as a household appliance, an electricity meter, or a vending machine that is applied to the Internet of Things.

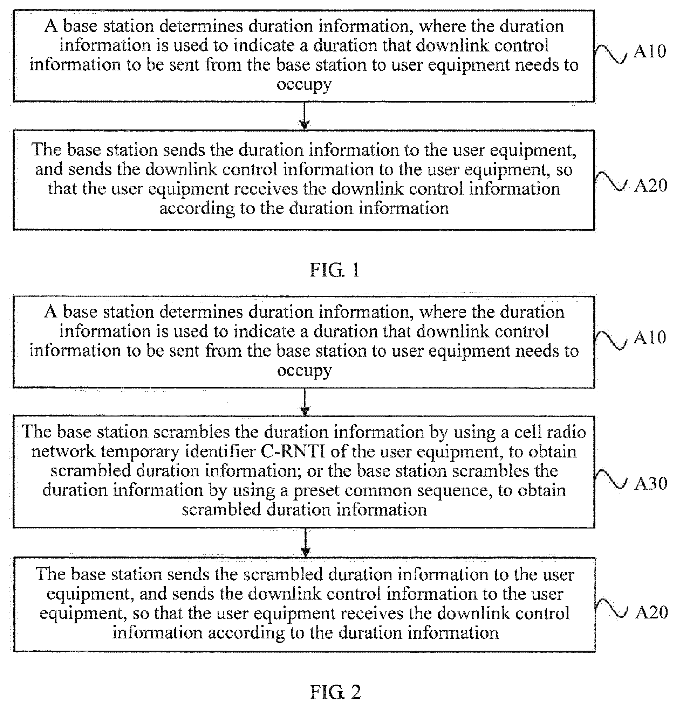

FIG. 1 is a flowchart of a first method for transmitting downlink control information (Downlink Control Information, DCI for short) according to an embodiment of the present invention. As shown in FIG. 1, the method for transmitting downlink control information provided in this embodiment may be specifically applied to a processing process in which a base station sends downlink control information to a user equipment in a communications system, particularly an LTE communications system. The downlink control information may be downlink dedicated control information that is dedicated for the user equipment, or may be downlink common control information, and is sent from the base station to the user equipment by means of a physical downlink control channel (Physical Downlink Control Channel, PDCCH for short).

The method for transmitting downlink control information provided in this embodiment specifically includes:
Step A10: A base station determines duration information, where the duration information is used to indicate a duration that downlink control information to be sent from the base station to a user equipment needs to occupy.
Step A20: The base station sends the duration information to the user equipment, and sends the downlink control information to the user equipment, so that the user equipment receives the downlink control information according to the duration information.

Specifically, the base station may determine, according to a network status of an environment in which the user equipment is located, whether processing for enhancing coverage needs to be performed. When the network status of the environment in which the user equipment is located is good, the coverage does not need to be enhanced, the base station may send the downlink control information to the user equipment in one subframe, and the duration information determined by the base station is used to indicate that the duration that the downlink control information to be sent from the base station to the user equipment needs to occupy is one subframe. When the network status of the environment in which the user equipment is located is not good, the coverage needs to be enhanced, the base station may send the downlink control information to the user equipment in multiple subframes, and the duration information determined by the base station is used to indicate that the duration that the downlink control information to be sent from the base station to the user equipment needs to occupy is multiple subframes. The multiple subframes may be multiple consecutive subframes. After the base station sends the duration information to the user equipment, the user equipment can receive, according to the duration information, the downlink control information sent from the base station. Therefore, no matter whether the duration information indicates one subframe or multiple subframes, the user equipment can perform corresponding processing. If the duration occupied for sending the downlink control information by the base station is measured by using millisecond or the like as a unit of measurement, a unit of measurement of the duration indicated by the duration information is also millisecond or the like.

In an actual application, the base station may send the downlink control information repeatedly in the multiple subframes. Each subframe in the multiple subframes may include entire content of the downlink control information, that is, the subframes may be different redundancy versions that include same data. A quantity of times of repeated sending, that is, a quantity of subframes that need to be occupied for sending the downlink control information, may be set according to a coverage enhancing need.

A research result of a project team "Provision of low-cost MTC UEs based on LTE" specially set up by the standardization organization 3GPP shows that, for many Internet of Things devices installed in an environment in which network coverage is relatively poor, it is required that the coverage is increased by at least 20 dB to meet a coverage requirement, and a quantity of dBs required for compensating each channel can be obtained according to an MCL (Minimum coupling loss, minimum coupling loss) table in a 3GPP TR (Technical Report, technical report) 36.888. For example, for a non-low cost (low cost) user equipment, if coverage is enhanced by 20 dB, and a compensation value for enhancement of PDCCH coverage is 14.6 d_{B}, 10^{14.6/10}=29 times of repetition are required; and for a low cost user equipment, if coverage is enhanced by 20 dB, and a compensation value for enhancement of PDCCH coverage is 23.6 dB, 10^{23.6/10}=230 times of repetition are required. A quantity of times of repetition can be determined according to positions at which different user equipments are disposed and types of the user equipments, then a duration occupied for sending the downlink control information can be learned and duration information is obtained, and the duration information is sent to the user equipment, so that the user equipment can learn the quantity of times that the base station sends the downlink control information repeatedly.

In addition, the base station may also send the downlink control information that is divided in the multiple subframes, where each subframe in the multiple subframes may include only partial content of the downlink control information. For example, the base station may divide the downlink control information, and send the divided downlink control information separately by using the multiple subframes, where information sent in each subframe is partial bits of the downlink control information. In the foregoing manner, the downlink control information is divided and is sent by using multiple subframes; because a quantity of bits carried by each subframe is relatively small, a quantity of bits of the downlink control information is decreased, and a bit rate is reduced; in this way, a time-frequency resource is reduced, and an objective of enhancing coverage can be achieved.

In an actual implementation process, there is no necessary time sequence relationship between a process in which the base station sends the downlink control information to the user equipment and a process of sending the duration information; the two processes may be executed in parallel, or it may be that the duration information is sent before the downlink control information is sent, or it may be that the duration information is sent before the multiple subframes for sending the downlink control information end.

The base station may send the duration information to the user equipment by using a preset time-frequency resource, where the preset time-frequency resource refers to a fixed block of time-frequency resource such as 6 RBs (Resource Block, resource block) at a spectrum center of a specific subframe. On the specific time-frequency resource, besides sending the duration information for the user equipment, the base station may also send some common control information, such as an SIB (System Information Block, system information block), an RAR (Random Access Response, random access response), or Paging (paging). For example, the downlink control information sent from the base station to the user equipment occupies 5 subframes, and therefore, the duration information sent from the base station to the user equipment may be "101 ", to indicate 5 subframes. The base station may also send the duration information on the specific time-frequency resource in a frequency domain spread spectrum manner, to further enhance the coverage of the duration information.

According to the method for transmitting downlink control information provided in this embodiment, a base station determines duration information, where the duration information is used to indicate a duration that downlink control information to be sent from the base station to a user equipment needs to occupy, sends the duration information to the user equipment, and sends the downlink control information to the user equipment, so that the user equipment receives the downlink control information according to the duration information. The base station may determine a coverage enhancing need according to a network status of an environment in which the user equipment is located, determine a duration occupied for sending the downlink control information to the user equipment, send the downlink control information to the user equipment in the duration, and notify the user equipment of the duration occupied for sending the downlink control information, so that the user equipment can successfully receive the downlink control information, thereby achieving an objective of flexibly enhancing coverage.

In this embodiment, step A20 of sending, by the base station, the duration information to the user equipment may include:
sending, by the base station, the duration information to the user equipment on a preset time-frequency resource, where the preset time-frequency resource is used to bear the duration information.

In this embodiment, the sending, by the base station, the duration information to the user equipment on a preset time-frequency resource may include:
sending, by the base station, the duration information to the user equipment on the preset time-frequency resource in a frequency domain spread spectrum manner.

That the base station sends the duration information to the user equipment in the frequency domain spread spectrum manner can further enhance the coverage of the duration information, and improve an effect of transmitting the duration information.

In this embodiment, the preset time-frequency resource may be further used to bear downlink common control information, where the downlink common control information includes at least one of the following: a system information block, a random access response, and a paging message.

In this embodiment, the preset time-frequency resource may be further used to bear a quantity of resource blocks occupied by the downlink control information.

In this embodiment, if the duration that the downlink control information needs to occupy and that is indicated by the duration information is multiple subframes, step A20 of sending, by the base station, the downlink control information to the user equipment includes:
sending, by the base station, the downlink control information repeatedly in the multiple subframes, where each subframe in the multiple subframes includes entire content of the downlink control information; or
sending, by the base station, the downlink control information that is divided in the multiple subframes, where each subframe in the multiple subframes includes only partial content of the downlink control information.

Specifically, this embodiment provides two manners for sending the downlink control information, to enhance coverage. In one implementation manner, the base station sends the downlink control information repeatedly in the multiple subframes, and sends entire content of the downlink control information in each subframe. In an actual application, the base station may send different redundancy versions of the downlink control information in the subframes. By sending the downlink control information repeatedly to the user equipment, an objective of enhancing coverage is achieved, and the operation is simple and easy to be implemented. In another implementation manner, the base station sends the downlink control information that is divided in the multiple subframes, that is, the base station sends partial content of the downlink control information in each subframe. Because a quantity of bits carried by each subframe is relatively small, a quantity of bits of the downlink control information is decreased, and a bit rate is reduced; in this way, a time-frequency resource is reduced, and an objective of enhancing coverage can be achieved.

In this embodiment, the downlink control information does not include preset field information, where the preset field information is pre-configured by a system; or the preset field information is configured by means of higher layer signaling.

Specifically, generally downlink control information may include multiple fields. Using Format 1A as an example, downlink control information includes fields such as resource allocation information, a modulation and coding scheme (Modulation and Coding Scheme, MCS for short), a quantity of hybrid automatic repeat request (Hybrid Automatic Repeat reQuest, HARQ for short) processes, new data index information, a redundancy version, and power control information of a PUCCH (Physical Uplink Control Channel, Physical Uplink Control Channel). Information about some of the foregoing fields may be pre-configured by the system, or is set by using higher layer signaling. In this case, the base station does not need to send the configured information to the user equipment by adding the configured information to the downlink control information. Therefore, the downlink control information may be redesigned, so that the downlink control information does not include pre-configured field information, and includes only field information that is not pre-configured for the user equipment, to achieve an objective of reducing the downlink control information; in this way, a time-frequency resource is reduced, and coverage can be further enhanced by reducing a bit rate of the downlink control information.

FIG. 2 is a flowchart of a second method for transmitting downlink control information according to an embodiment of the present invention. As shown in FIG. 2, in this embodiment, before step A20 of sending, by the base station, the duration information to the user equipment, the method may further include:
Step A30: The base station scrambles the duration information by using a cell radio network temporary identifier C-RNTI of the user equipment, to obtain scrambled duration information; or
the base station scrambles the duration information by using a preset common sequence, to obtain scrambled duration information; and
step A20 of sending, by the base station, the duration information to the user equipment includes:
   sending, by the base station, the scrambled duration information to the user equipment.

Specifically, the base station may send the duration information in a manner dedicated for the user equipment, and perform scrambling processing on the duration information by using the C-RNTI of the user equipment; and after receiving the duration information on which the scrambling processing is already performed, the user equipment can perform descrambling by using the C-RNTI of the user equipment, to read the information. The base station may also send the duration information in a manner of sharing by multiple users, and perform scrambling processing on the duration information by using the preset common sequence; and after receiving the duration information on which the scrambling processing is already performed, the user equipment may perform descrambling by using the preset common sequence, and extract, according to a preset rule and at a corresponding position, the duration information that belongs to the user equipment.

In this embodiment, before step A20 of sending, by the base station, the downlink control information to the user equipment, the method may further include:
performing, by the base station, encoding processing on the downlink control information; and
accordingly, step A20 of sending, by the base station, the downlink control information to the user equipment may include:
   sending, by the base station, the downlink control information on which the encoding processing is already performed to the user equipment.

Specifically, RM (Reed-Muller) code encoding or convolutional code encoding may be used as a manner in which the base station encodes the downlink control information. When the RM code encoding is used, CRC (Cyclic Redundancy Check, cyclic redundancy check) may not be used; and when the convolutional code encoding is used, CRC may be used, and preferably, a quantity of bits of the CRC is less than or equal to 8 bits.

The following describes this embodiment by using several examples.

A quantity of frequency domain resources of a PDSCH (Physical Downlink Shared Channel, physical downlink shared channel)/a PUSCH (Physical Uplink Shared Channel, physical uplink shared channel) that are scheduled by using the downlink control information may be fixed, for example, 1 RB; and a frequency domain position may be indicated by the downlink control information, or may be set by means of higher layer signaling, or may be bound to the C-RNTI of the user equipment or an ID (Identity, identity) of the user equipment. For example, assuming that system bandwidth is 10 M, that is, includes 50 RBs, the frequency domain position of the UE may be calculated by using n_{RNTI} mod 50, where n_{RNTI} is a C-RNTI value of the user equipment.

There is a relationship between a time domain end time of the downlink control information and a time domain start time of a scheduled channel, where the relationship may be set by the system, for example, an interval of 4 ms.

In a process in which the base station sends the downlink control information, M time-frequency resources are scheduled at one time, where the time-frequency resources have a same size; hopping (hopping) may be performed on a frequency domain, that is, a frequency domain resource for transmission is selected according to a formula, which is similar to hopping on a PUSCH in the prior art, or the hopping may not be performed, and a quantity of bits of the downlink control information is as small as possible.

The downlink control information may include resource allocation information; and if a consecutive resource allocation manner is used, for example, entire available bandwidth is limited to 6 RBs, the first RB is always allocated for transmission of the downlink control information, and the remaining 5 RBs may be provided for data transmission, and therefore, a total of 4 bits are required to indicate a frequency domain resource. If only 1 RB is always scheduled for uplink transmission, the quantity of bits may be further decreased to 3 bits.

The downlink control information may not include an MCS field, a modulation scheme is always QPSK (Quadrature Phase Shift Keying, quadrature phase shift keying) or BPSK (Binary Phase Shift Keying, Binary Phase Shift Keying), and a bit rate may also be fixed.

If the foregoing control parameters are already pre-configured, the generated downlink control information may not include the foregoing content.

In this embodiment, the downlink control information includes at least one of the following information:
a quantity of modulation symbols, a time domain spreading factor, time of a single transmission, a quantity of transmission times, and a transport block size.

Specifically, the downlink control information may include 3 bits of information to indicate a quantity N of modulation symbols, a time domain spreading factor, time K of a single transmission (that is, time domain repetition interval), a quantity of transmission times, or a transport block size (Transport Block Size, TBS for short). If a fixed modulation scheme is used, assuming that TTIs are K 1 ms, that is, data is repeatedly transmitted in K subframes, a total quantity of symbols is K×10 (herein it is assumed that a normal CP (Cyclic prefix, cyclic prefix) is used, 4 symbols are used for a pilot, and therefore, 10 symbols are used for data transmission), and a spreading factor is K×10/N. There may be the following several manners:
one manner is that: M and K are set by the system, or are sent by means of higher layer signaling; and the quantity N of modulation symbols is sent by means of the DCI;
another manner is that: M is sent by means of the DCI, and N and K are set by the system, or are sent by means of higher layer signaling; and
still another manner is that: K is sent by means of the DCI, and N and M are set by the system, or are sent by means of higher layer signaling.

A CRC length of the downlink control information may be 8 bits or 5 bits. Generally, 2^(n_{CRC_Bits} -1)-1- n_{CRC_Bits} >= a quantity of bits of original information, where n_{CRC_Bits} is a quantity of bits of the CRC. If the bits of the original information are 6 bits, 5 bits are enough for the CRC. If the CRC length of the DCI is 8 bits or fewer, a C-RNTI (cell Radio Network Temporary Identifier, cell radio network temporary identifier)/an SI-RNTI (System Information Radio Network Temporary Identifier, system information radio network temporary identifier)/a P-RNTI (Paging Radio Network Temporary Identifier, paging radio network temporary identifier)/an RA-RANTI (Random Access Radio Network Temporary Identifier, random access radio network temporary identifier) (16 bits) may need to be mapped to a certain extent to 8 bits or fewer bits; and if a problem of a false alarm for the downlink control information exists, a false alarm rate may be decreased by decreasing a quantity of pieces of downlink control information and a quantity of blind detection times.

A format of the downlink control information may be set according to an actual control need. In a first implementation manner, the downlink control information is encoded by using convolutional code, and includes CRC. If a total quantity of bits of the downlink control information is 3 (resource allocation)+3 (the quantity N of modulation symbols, the time domain spreading factor, the time K of a single transmission, the quantity of transmission times, or the TBS)+8 (a quantity of bits of the CRC)=14 bits, a gain brought by decrease of the quantity of bits is 10log(44/14)≈5 dB, where 44 is a quantity of bits of downlink control information in the prior art. A quantity of REs (Resource Element, resource element) used in the prior art is 36×8=288, and therefore, compensation values respectively for 14.6 dB and 23.6 dB are as follows:
14.6 dB-5 dB≈10 dB, which corresponds to 10 times of repetition, and a quantity of required REs is 288×10=2880; assuming that a quantity of occupied RBs is B and the time of a single transmission is K, B×12 (a quantity of subcarriers)×10 (a quantity of symbols for data transmission)×M≥2880, where if B=6, M may be 4; and
23.6 dB-5 dB=18.6 dB, which corresponds to 73 times of repetition, and the quantity of required REs is 288×73; assuming that the quantity of occupied RBs is B and the time of a single transmission is K, B×12×10×M≥288×73, where if B=6, M maybe 30.

In a second implementation manner, the downlink control information is encoded by using convolutional code, and includes CRC. If a total quantity of bits of the downlink control information is 3 (resource allocation)+3 (the quantity N of modulation symbols, the time domain spreading factor, the time K of a single transmission, the quantity of transmission times, or the TBS)+5 (a quantity of bits of the CRC)=11 bits, a gain brought by decrease of the quantity of bits is 10log(44/11)=6 dB; a quantity of REs originally used by a PDCCH is 36×8=288, and therefore, compensation values respectively for 14.6 dB and 23.6 dB are as follows:
14.6 dB -6 dB=8.6 dB, and the quantity of required REs is 288×10^{8.6/10}=2087; assuming that the quantity of occupied RBs is B and the time of a single transmission is K, B×12×10×M≥2087, where if B=6, M maybe 3; and
23.6 dB -6 dB=17.6 dB, and the quantity of required REs is 288× 10^{17.6/10}=16573; assuming that the quantity of occupied RBs is B and the time of a single transmission is K, B×12×10×M≥16573, where if B=6, M may be 23.

In a third implementation manner, if the downlink control information does not include resource allocation information, the downlink control information is further decreased to 3 bits (the quantity N of modulation symbols, the time domain spreading factor, the time K of a single transmission, the quantity of transmission times, or the TBS); CRC is 4 bits, and therefore, a total quantity of bits is 7 bits, and a gain brought by decrease of the quantity of bits is 10log(44/7)=7.9 dB; a quantity of originally used REs is 36×8=288, and therefore, compensation values respectively for 14.6 dB and 23.6 dB are as follows:
14.6 dB -7.9 dB=6.7 dB, and the quantity of required REs is 288×10^{6.7/10}=1348; assuming that the quantity of occupied RBs is B and the time of a single transmission is K, B×12×10×M≥1348, where if B=6, M may be 2; and
23.6 dB -7.9 dB=15.7, and the quantity of required REs is 288×10^{15.7/10}=10700; assuming that the quantity of occupied RBs is B and the time of a single transmission is K, B×12×10×M≥10700, where if B=6, M may be 15.

In a fourth implementation manner, the downlink control information is encoded by using RM code, and does not include CRC. Therefore, a total quantity of bits is 3 (resource allocation)+3 (the quantity N of modulation symbols, the time domain spreading factor, the time K of a single transmission, the quantity of transmission times, or the TBS)=6 bits, and a gain brought by decrease of the quantity of bits is 10log(44/6)=8.6 dB; a quantity of originally used REs is 36×8=288, and therefore, compensation values respectively for 14.6 dB and 23.6 dB are as follows:
14.6 dB -8.6 dB=6 dB, and the quantity of required REs is 288×10^{6/10}=1147; assuming that the quantity of occupied RBs is B and the time of a single transmission is K, B×12×10×M≥1147, where if B=6, M maybe 2; and
23.6 dB -8.6 dB=15, and the quantity of required REs is 288×10^{15/10}=16573; assuming that the quantity of occupied RBs is B and the time of a single transmission is K, B×12×10×M≥16573, where if B=6, M maybe 13.

In a fifth implementation manner, the downlink control information is encoded by using RM code, and does not include CRC. If the downlink control information does not include resource allocation information, the downlink control information is further decreased by 3 bits. RM code is used, and therefore, a total quantity of bits is 3, and a gain brought by decrease of the quantity of bits is 10log(44/3)=11.6 dB; a quantity of originally used REs is 36×8=288, and therefore, compensation values respectively for 14.6 dB and 23.6 dB are as follows:
14.6 dB -11.6 dB=3 dB, and the quantity of required REs is 288×10^{3/10}=576; assuming that the quantity of occupied RBs is B and the time of a single transmission is K, B×12×10×M≥576, where if B=5, M maybe 1; and
23.6-11.6 dB=12, and the quantity of required REs is 288×10^{12/10}=4565; assuming that the quantity of occupied RBs is B and the time of a single transmission is K, B×12×10×M≥4565, where if B=6, M may be 7.

In this embodiment, the downlink control information is downlink dedicated control information or downlink common control information.

Specifically, the downlink common control information (for example, SIB/RAR/PAGING) must be received by a user with worst coverage (maximum coverage compensation is 14.6 dB or 23.6 dB). The coverage may be enhanced also by using a method of repeated sending. For example, RBs in which the downlink control information corresponding to the SIB is located are at fixed positions and are 6 RBs at the center, the duration is greater than or equal to 7 ms or 1 ms, and RBs of a PDSCH corresponding to the DCI are also at fixed positions and are also 6 RBs; there is a relationship between an end time of the duration of the DCI corresponding to the SIB and a start time of the PDSCH, where the relationship may be set by the system, for example, the start time of the PDSCH is immediately after the end time of the duration of the corresponding DCI. For another piece of common control signaling, coverage may be enhanced also by using a similar method.

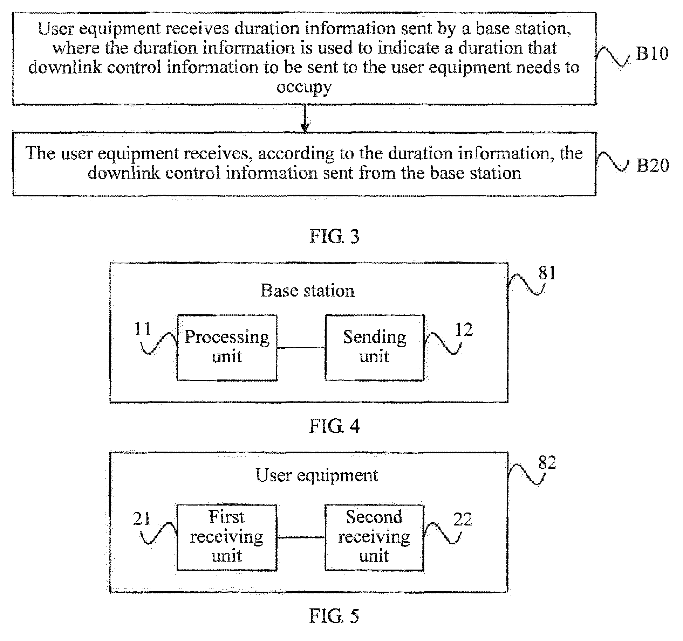

FIG. 3 is a flowchart of a third method for transmitting downlink control information according to an embodiment of the present invention. As shown in FIG. 3, the method for transmitting downlink control information provided in this embodiment may be specifically implemented in cooperation with the method applied to a base station and provided in any embodiment of the present invention, and details about a specific implementation process are not provided again herein. The method for transmitting downlink control information provided in this embodiment specifically includes:

Step B10: A user equipment receives duration information sent from a base station, where the duration information is used to indicate a duration that downlink control information to be sent to the user equipment needs to occupy.

Step B20: The user equipment receives, according to the duration information, the downlink control information sent from the base station.

Specifically, the base station may notify in advance the user equipment of a time-frequency resource used for sending the downlink control information, that is, the user equipment may determine a time point and a frequency domain position for receiving the downlink control information. After the user equipment receives the duration information sent from the base station, the user equipment may receive the downlink control information according to the duration information by using the time point as a start point and in the duration indicated by the duration information.

According to the method for transmitting downlink control information provided in this embodiment, a user equipment receives duration information sent from a base station, and receives, according to the duration information, downlink control information sent from the base station. In a process in which the base station determines the duration information, the base station may determine a coverage enhancing need according to a network status of an environment in which the user equipment is located, determine a duration occupied for sending the downlink control information to the user equipment, send the downlink control information to the user equipment in the duration, and notify the user equipment of the duration occupied for sending the downlink control information, so that the user equipment can successfully receive the downlink control information, thereby achieving an objective of flexibly enhancing coverage.

In this embodiment, the downlink control information does not include preset field information, where the preset field information is pre-configured by a system; or the preset field information is configured by means of higher layer signaling.

In an actual application process, the user equipment receives the downlink control information sent from the base station, and performs corresponding configuration. Generally, downlink control information may include multiple fields. Using Format 1A as an example, downlink control information includes fields such as resource allocation information, an MCS, a quantity of HARQ processes, new data index information, a redundancy version, and power control information of a PUCCH. Information about some of the foregoing fields may be pre-configured by the system, or is set by means of higher layer signaling. In this case, the base station does not need to send the configured information to the user equipment by adding the configured information to the downlink control information.

In this embodiment, the downlink control information includes at least one of the following information:
a quantity of modulation symbols, a time domain spreading factor, time of a single transmission, a quantity of transmission times, and a transport block size.

In this embodiment, step B10 of receiving, by a user equipment, duration information sent from a base station may include:
receiving, by the user equipment, the duration information sent on a preset time-frequency resource by the base station, where the preset time-frequency resource is used to bear the duration information.

In this embodiment, the receiving, by the user equipment, the duration information sent on a preset time-frequency resource by the base station includes:
receiving, by the user equipment, the duration information sent on the preset time-frequency resource in a frequency domain spread spectrum manner by the base station.

In this embodiment, the preset time-frequency resource is further used to bear downlink common control information, where the downlink common control information includes at least one of the following: a system information block, a random access response, and a paging message.

In this embodiment, the preset time-frequency resource is further used to bear a quantity of resource blocks occupied by the downlink control information.

In this embodiment, step B10 of receiving, by a user equipment, duration information sent from a base station may include:
receiving, by the user equipment, scrambled duration information sent from the base station, where the scrambled duration information is:
   scrambled duration information obtained by the base station by scrambling the duration information by using a cell radio network temporary identifier C-RNTI of the user equipment; or
   scrambled duration information obtained by the base station by scrambling the duration information by using a preset common sequence.

In this embodiment, before step B20 of receiving, by the user equipment according to the duration information, the downlink control information sent from the base station, the method may further include:
obtaining, by the user equipment, frequency domain resource configuration information, and determining a frequency domain position of the user equipment according to the frequency domain resource configuration information.

Specifically, a quantity of frequency domain resources of a PDSCH/a PUSCH that are scheduled by using the downlink control information may be fixed, for example, 1 RB; and a frequency domain position may be indicated by the downlink control information, or may be set by means of higher layer signaling, or may be bound to the C-RNTI of the user equipment or an ID of the user equipment. For example, assuming that system bandwidth is 10 M, that is, includes 50 RBs, the frequency domain position of the UE may be calculated by using n_{RNTI} mod 50, where n_{RNTI} is a C-RNTI value of the user equipment.

In this embodiment, before step B20 of receiving, by the user equipment according to the duration information, the downlink control information sent from the base station, the method may further include:
obtaining, by the user equipment, time domain configuration information, and determining a time domain start time of a scheduled channel according to the time domain configuration information.

Specifically, there is a relationship between a time domain end time of the downlink control information and a time domain start time of a scheduled channel, where the relationship may be set by the system, for example, an interval of 4 ms.

In this embodiment, before step B20 of receiving, by the user equipment according to the duration information, the downlink control information sent from the base station, the method further includes:
obtaining, by the user equipment, modulation scheme configuration information, and configuring a modulation scheme according to the modulation scheme configuration information.

In this embodiment, the downlink control information is downlink dedicated control information or downlink common control information.

FIG. 4 is a schematic structural diagram of a first base station according to an embodiment of the present invention. As shown in FIG. 5, the base station 81 provided in this embodiment can specifically implement steps of the method for transmitting downlink control information that is applied to a base station and provided in any embodiment of the present invention, and details about a specific implementation process are not provided again herein. The base station 81 provided in this embodiment specifically includes:
a processing unit 11, configured to determine duration information, where the duration information is used to indicate a duration that downlink control information to be sent from the base station to a user equipment needs to occupy; and
a sending unit 12, configured to send the duration information determined by the processing unit 11 to the user equipment, and send the downlink control information to the user equipment, so that the user equipment receives the downlink control information according to the duration information.

The base station provided in this embodiment may determine a coverage enhancing need according to a network status of an environment in which user equipment is located, determine a duration occupied for sending downlink control information to the user equipment, send the downlink control information to the user equipment in the duration, and notify the user equipment of the duration occupied for sending the downlink control information, so that the user equipment can successfully receive the downlink control information, thereby achieving an objective of flexibly enhancing coverage.

Optionally, in this embodiment, the downlink control information does not include preset field information, where the preset field information is pre-configured by a system; or the preset field information is configured by means of higher layer signaling.

Optionally, in this embodiment, the downlink control information includes at least one of the following information:
a quantity of modulation symbols, a time domain spreading factor, time of a single transmission, a quantity of transmission times, and a transport block size.

In this embodiment, if the duration that the downlink control information needs to occupy and that is indicated by the duration information is multiple subframes, the sending unit 12 is specifically configured to send the downlink control information repeatedly in the multiple subframes, where each subframe in the multiple subframes includes entire content of the downlink control information; or the sending unit is specifically configured to send the downlink control information that is divided in the multiple subframes, where each subframe in the multiple subframes includes only partial content of the downlink control information.

In this embodiment, the sending unit 12 is specifically configured to send the duration information to the user equipment on a preset time-frequency resource, where the preset time-frequency resource is used to bear the duration information.

Optionally, in this embodiment, the sending unit 12 is specifically configured to send the duration information to the user equipment on the preset time-frequency resource in a frequency domain spread spectrum manner.

Optionally, in this embodiment, the preset time-frequency resource is further used to bear downlink common control information, where the downlink common control information includes at least one of the following: a system information block, a random access response, and a paging message.

In this embodiment, the preset time-frequency resource is further used to bear a quantity of resource blocks occupied by the downlink control information.

In this embodiment, the processing unit 11 is further configured to scramble the duration information by using a cell radio network temporary identifier C-RNTI of the user equipment, to obtain scrambled duration information; or scramble the duration information by using a preset common sequence, to obtain scrambled duration information; and that the sending unit 12 is configured to send the duration information determined by the processing unit to the user equipment includes that: the sending unit 12 is configured to send the scrambled duration information to the user equipment.

FIG. 5 is a schematic structural diagram of a first user equipment according to an embodiment of the present invention. As shown in FIG. 5, the user equipment 82 provided in this embodiment can specifically implement steps of the method for transmitting downlink control information that is applied to a user equipment and provided in any embodiment of the present invention, and details about a specific implementation process are not provided again herein. The user equipment 82 provided in this embodiment specifically includes:
a first receiving unit 21, configured to receive duration information sent from a base station, where the duration information is used to indicate a duration that downlink control information to be sent to the user equipment needs to occupy; and
a second receiving unit 22, configured to receive, according to the duration information received by the first receiving unit 21, the downlink control information sent from the base station.

In an actual implementation process, the first receiving unit 21 and the second receiving unit 22 may be implemented by using a same receiving unit.

In the user equipment provided in this embodiment, the first receiving unit 21 receives duration information sent from a base station, the second receiving unit 22 receives, according to the duration information, downlink control information that is sent from the base station in a duration indicated by the duration information. In a process in which the base station determines the duration information, the base station may determine a coverage enhancing need according to a network status of an environment in which the user equipment is located, determine a duration occupied for sending the downlink control information to the user equipment, send the downlink control information to the user equipment in the duration, and notify the user equipment of the duration occupied for sending the downlink control information, so that the user equipment can successfully receive the downlink control information, thereby achieving an objective of flexibly enhancing coverage.

In this embodiment, the downlink control information does not include preset field information, where the preset field information is pre-configured by a system; or the preset field information is configured by means of higher layer signaling.

In this embodiment, the downlink control information includes at least one of the following information:
a quantity of modulation symbols, a time domain spreading factor, time of a single transmission, a quantity of transmission times, and a transport block size.

In this embodiment, the first receiving unit 11 is specifically configured to receive the duration information sent on a preset time-frequency resource by the base station, where the preset time-frequency resource is used to bear the duration information.

In this embodiment, the first receiving unit 11 is specifically configured to receive the duration information sent on the preset time-frequency resource in a frequency domain spread spectrum manner by the base station.

In this embodiment, the preset time-frequency resource is further used to bear downlink common control information, where the downlink common control information includes at least one of the following: a system information block, a random access response, and a paging message.

In this embodiment, the preset time-frequency resource is further used to bear a quantity of resource blocks occupied by the downlink control information.

In this embodiment, the first receiving unit 11 is specifically configured for the user equipment to receive scrambled duration information sent from the base station, where the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.

The user equipment may further include:
a first processing unit, configured to obtain frequency domain resource configuration information, and determine a frequency domain position of the user equipment according to the frequency domain resource configuration information.

In this embodiment, the user equipment may further include:
a second processing unit, configured to obtain frequency domain resource configuration information, and determine a frequency domain position of the user equipment according to the frequency domain resource configuration information.

In this embodiment, the user equipment may further include:
a third processing unit, configured to obtain modulation scheme configuration information, and configure a modulation scheme according to the modulation scheme configuration information.

In an actual implementation process, the first processing unit, the second processing unit, and the third processing unit may be implemented by using a same processing unit.

In this embodiment, the downlink control information is downlink dedicated control information or downlink common control information.

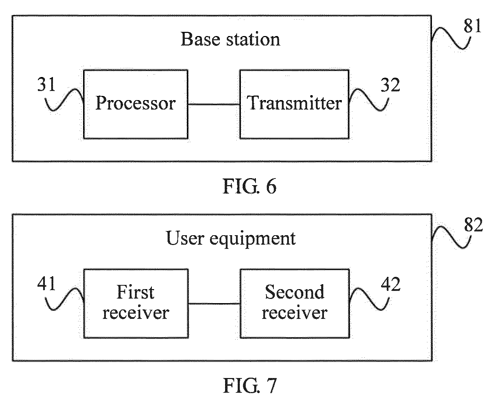

FIG. 6 is a schematic structural diagram of a second base station according to an embodiment of the present invention. As shown in FIG. 6, the base station 81 provided in this embodiment can specifically implement steps of the method for transmitting downlink control information that is applied to a base station and provided in any embodiment of the present invention, and details about a specific implementation process are not provided again herein. The base station 81 provided in this embodiment specifically includes:
a processor 31, configured to determine duration information, where the duration information is used to indicate a duration that downlink control information to be sent from the base station to a user equipment needs to occupy; and
a transmitter 32, configured to send the duration information determined by the processor 31 to the user equipment, and send the downlink control information to the user equipment, so that the user equipment receives the downlink control information according to the duration information.

In this embodiment, the downlink control information does not include preset field information, where the preset field information is pre-configured by a system; or the preset field information is configured by means of higher layer signaling.

In this embodiment, the downlink control information includes at least one of the following information:
a quantity of modulation symbols, a time domain spreading factor, time of a single transmission, a quantity of transmission times, and a transport block size.

In this embodiment, if the duration that the downlink control information needs to occupy and that is indicated by the duration information is multiple subframes, the transmitter 32 is specifically configured to send the downlink control information repeatedly in the multiple subframes, where each subframe in the multiple subframes includes entire content of the downlink control information; or the transmitter 32 is specifically configured to send the downlink control information that is divided in the multiple subframes, where each subframe in the multiple subframes includes only partial content of the downlink control information.

In this embodiment, the transmitter 32 is specifically configured to send the duration information to the user equipment on a preset time-frequency resource, where the preset time-frequency resource is used to bear the duration information.

In this embodiment, the transmitter 32 is further configured to send the duration information to the user equipment on the preset time-frequency resource in a frequency domain spread spectrum manner.

In this embodiment, the preset time-frequency resource is further used to bear downlink common control information, where the downlink common control information includes at least one of the following: a system information block, a random access response, and a paging message.

In this embodiment, the preset time-frequency resource is further used to bear a quantity of resource blocks occupied by the downlink control information.

In this embodiment, the processor 31 is further configured to scramble the duration information by using a cell radio network temporary identifier C-RNTI of the user equipment, to obtain scrambled duration information; or scramble the duration information by using a preset common sequence, to obtain scrambled duration information; and that the transmitter 32 is configured to send the duration information determined by the processor to the user equipment includes that: the transmitter 32 is configured to send the scrambled duration information to the user equipment.

In this embodiment, the processor 31 is further configured for the base station to perform encoding processing on the downlink control information, and determine a duration occupied by the encoded downlink control information sent to the user equipment. The transmitter 32 is further configured to send the encoded downlink control information to the user equipment in the duration.

In this embodiment, the downlink control information is downlink dedicated control information or downlink common control information.

FIG. 7 is a schematic structural diagram of a second user equipment according to an embodiment of the present invention. As shown in FIG. 7, the user equipment 82 provided in this embodiment can specifically implement steps of the method for transmitting downlink control information that is applied to a user equipment and provided in any embodiment of the present invention, and details about a specific implementation process are not provided again herein. The user equipment 82 provided in this embodiment specifically includes:
a first receiver 41, configured to receive duration information sent from a base station, where the duration information is used to indicate a duration that downlink control information to be sent to the user equipment needs to occupy; and
a second receiver 42, configured to receive, according to the duration information received by the first receiver 41, the downlink control information sent from the base station.

In an actual implementation process, the first receiver 41 and the second receiver 42 may be implemented by using a same receiver.

In this embodiment, the downlink control information does not include preset field information, where the preset field information is pre-configured by a system; or the preset field information is configured by means of higher layer signaling.

In this embodiment, the downlink control information includes at least one of the following information:
a quantity of modulation symbols, a time domain spreading factor, time of a single transmission, a quantity of transmission times, and a transport block size.

In this embodiment, the first receiver 41 is specifically configured to receive the duration information sent on a preset time-frequency resource by the base station, where the preset time-frequency resource is used to bear the duration information.

In this embodiment, the first receiver 41 is specifically configured to receive the duration information sent on the preset time-frequency resource in a frequency domain spread spectrum manner by the base station.

In this embodiment, the preset time-frequency resource is further used to bear downlink common control information, where the downlink common control information includes at least one of the following: a system information block, a random access response, and a paging message.

In this embodiment, the preset time-frequency resource is further used to bear a quantity of resource blocks occupied by the downlink control information.

In this embodiment, the first receiver 41 is specifically configured for the user equipment to receive scrambled duration information sent from the base station, where the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.

In this embodiment, the user equipment may further include:
a first processor, configured to obtain frequency domain resource configuration information, and determine a frequency domain position of the user equipment according to the frequency domain resource configuration information.

In this embodiment, the user equipment may further include:
a second processor, configured to obtain frequency domain resource configuration information, and determine a frequency domain position of the user equipment according to the frequency domain resource configuration information.

In this embodiment, the user equipment may further include:
a third processor, configured to obtain modulation scheme configuration information, and configure a modulation scheme according to the modulation scheme configuration information.

In an actual implementation process, the first processor, the second processor, and the third processor may be implemented by using a same processor.

In this embodiment, the downlink control information is downlink dedicated control information or downlink common control information.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for transmitting downlink control information, comprising:
determining, by a base station, duration information, wherein the duration information is used to indicate a duration that downlink control information to be sent from the base station to a user equipment needs to occupy; and
sending, by the base station, the duration information to the user equipment, and sending the downlink control information to the user equipment, so that the user equipment receives the downlink control information according to the duration information.

2. The method according to claim 1, wherein:
the downlink control information does not comprise preset field information, wherein the preset field information is pre-configured by a system; or the preset field information is configured by means of higher layer signaling.

3. The method according to claim 1 or 2, wherein the downlink control information comprises at least one of the following information:
a quantity of modulation symbols, a time domain spreading factor, time of a single transmission, a quantity of transmission times, and a transport block size.

4. The method according to any one of claims 1 to 3, wherein:
if the duration that the downlink control information needs to occupy and that is indicated by the duration information is multiple subframes, the sending, by the base station, the downlink control information to the user equipment comprises:
sending, by the base station, the downlink control information repeatedly in the multiple subframes, wherein each subframe in the multiple subframes comprises entire content of the downlink control information; or
sending, by the base station, the downlink control information that is divided in the multiple subframes, wherein each subframe in the multiple subframes comprises only partial content of the downlink control information.

5. The method according to any one of claims 1 to 4, wherein the sending, by the base station, the duration information to the user equipment comprises:
sending, by the base station, the duration information to the user equipment on a preset time-frequency resource, wherein the preset time-frequency resource is used to bear the duration information.

6. The method according to claim 5, wherein the sending, by the base station, the duration information to the user equipment on a preset time-frequency resource comprises:
sending, by the base station, the duration information to the user equipment on the preset time-frequency resource in a frequency domain spread spectrum manner.

7. The method according to claim 5 or 6, wherein:
the preset time-frequency resource is further used to bear downlink common control information, wherein the downlink common control information comprises at least one of the following: a system information block, a random access response, and a paging message.

8. The method according to any one of claims 5 to 7, wherein:
the preset time-frequency resource is further used to bear a quantity of resource blocks occupied by the downlink control information.

9. The method according to any one of claims 1 to 8, wherein before the sending, by the base station, the duration information to the user equipment, the method further comprises:
scrambling, by the base station, the duration information by using a cell radio network temporary identifier C-RNTI of the user equipment, to obtain scrambled duration information; or
scrambling, by the base station, the duration information by using a preset common sequence, to obtain scrambled duration information; and
the sending, by the base station, the duration information to the user equipment comprises:
sending, by the base station, the scrambled duration information to the user equipment.

10. A method for transmitting downlink control information, comprising:
receiving, by a user equipment, duration information sent from a base station, wherein the duration information is used to indicate a duration that downlink control information to be sent to the user equipment needs to occupy; and
receiving, by the user equipment according to the duration information, the downlink control information sent from the base station.

11. The method according to claim 10, wherein:
the downlink control information does not comprise preset field information, wherein the preset field information is pre-configured by a system; or the preset field information is configured by means of higher layer signaling.

12. The method according to claim 10 or 11, wherein the downlink control information comprises at least one of the following information:
a quantity of modulation symbols, a time domain spreading factor, time of a single transmission, a quantity of transmission times, and a transport block size.

13. The method according to any one of claims 10 to 12, wherein the receiving, by a user equipment, duration information sent from a base station comprises:
receiving, by the user equipment, the duration information sent on a preset time-frequency resource by the base station, wherein the preset time-frequency resource is used to bear the duration information.

14. The method according to claim 13, wherein the receiving, by the user equipment, the duration information sent on a preset time-frequency resource by the base station comprises:
receiving, by the user equipment, the duration information sent on the preset time-frequency resource in a frequency domain spread spectrum manner by the base station.

15. The method according to claim 13 or 14, wherein:
the preset time-frequency resource is further used to bear downlink common control information, wherein the downlink common control information comprises at least one of the following: a system information block, a random access response, and a paging message.

16. The method according to any one of claims 13 to 15, wherein:
the preset time-frequency resource is further used to bear a quantity of resource blocks occupied by the downlink control information.

17. The method according to any one of claims 10 to 16, wherein the receiving, by a user equipment, duration information sent from a base station comprises:
receiving, by the user equipment, scrambled duration information sent from the base station, wherein the scrambled duration information is:
scrambled duration information obtained by the base station by scrambling the duration information by using a cell radio network temporary identifier C-RNTI of the user equipment; or
scrambled duration information obtained by the base station by scrambling the duration information by using a preset common sequence.

18. Abase station, comprising:
a processing unit, configured to determine duration information, wherein the duration information is used to indicate a duration that downlink control information to be sent from the base station to a user equipment needs to occupy; and
a sending unit, configured to send the duration information determined by the processing unit to the user equipment, and send the downlink control information to the user equipment, so that the user equipment receives the downlink control information according to the duration information.

19. The base station according to claim 18, wherein:
the downlink control information does not comprise preset field information, wherein the preset field information is pre-configured by a system; or the preset field information is configured by means of higher layer signaling.

20. The base station according to claim 18 or 19, wherein the downlink control information comprises at least one of the following information:
a quantity of modulation symbols, a time domain spreading factor, time of a single transmission, a quantity of transmission times, and a transport block size.

21. The base station according to any one of claims 18 to 20, wherein if the duration that the downlink control information needs to occupy and that is indicated by the duration information is multiple subframes, the sending unit is specifically configured to send the downlink control information repeatedly in the multiple subframes, wherein each subframe in the multiple subframes comprises entire content of the downlink control information; or the sending unit is specifically configured to send the downlink control information that is divided in the multiple subframes, wherein each subframe in the multiple subframes comprises only partial content of the downlink control information.

22. The base station according to any one of claims 18 to 21, wherein the sending unit is specifically configured to send the duration information to the user equipment on a preset time-frequency resource, wherein the preset time-frequency resource is used to bear the duration information.

23. The base station according to claim 22, wherein the sending unit is specifically configured to send the duration information to the user equipment on the preset time-frequency resource in a frequency domain spread spectrum manner.

24. The base station according to claim 22 or 23, wherein the preset time-frequency resource is further used to bear downlink common control information, wherein the downlink common control information comprises at least one of the following: a system information block, a random access response, and a paging message.

25. The base station according to any one of claims 22 to 24, wherein the preset time-frequency resource is further used to bear a quantity of resource blocks occupied by the downlink control information.

26. The base station according to any one of claims 18 to 25, wherein the processing unit is further configured to scramble the duration information by using a cell radio network temporary identifier C-RNTI of the user equipment, to obtain scrambled duration information; or scramble the duration information by using a preset common sequence, to obtain scrambled duration information; and
that the sending unit is configured to send the duration information determined by the processing unit to the user equipment comprises that:
the sending unit is configured to send the scrambled duration information to the user equipment.

27. A user equipment, comprising:
a first receiving unit, configured to receive duration information sent from a base station, wherein the duration information is used to indicate a duration that downlink control information to be sent to the user equipment needs to occupy; and
a second receiving unit, configured to receive, according to the duration information received by the first receiving unit, the downlink control information sent from the base station.

28. The user equipment according to claim 27, wherein the downlink control information does not comprise preset field information, wherein the preset field information is pre-configured by a system; or the preset field information is configured by means of higher layer signaling.

29. The user equipment according to claim 27 or 28, wherein the downlink control information comprises at least one of the following information:
a quantity of modulation symbols, a time domain spreading factor, time of a single transmission, a quantity of transmission times, and a transport block size.

30. The user equipment according to any one of claims 27 to 29, wherein the first receiving unit is specifically configured to receive the duration information sent on a preset time-frequency resource by the base station, wherein the preset time-frequency resource is used to bear the duration information.

31. The user equipment according to claim 30, wherein the first receiving unit is specifically configured to receive the duration information sent on the preset time-frequency resource in a frequency domain spread spectrum manner by the base station.

32. The user equipment according to claim 30 or 31, wherein the preset time-frequency resource is further used to bear downlink common control information, wherein the downlink common control information comprises at least one of the following: a system information block, a random access response, and a paging message.

33. The user equipment according to any one of claims 30 to 32, wherein the preset time-frequency resource is further used to bear a quantity of resource blocks occupied by the downlink control information.

34. The user equipment according to any one of claims 27 to 33, wherein the first receiving unit is specifically configured for the user equipment to receive scrambled duration information sent from the base station, wherein the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.

35. Abase station, comprising:
a processor, configured to determine duration information, wherein the duration information is used to indicate a duration that downlink control information to be sent from the base station to a user equipment needs to occupy; and
a transmitter, configured to send the duration information determined by the processor to the user equipment, and send the downlink control information to the user equipment, so that the user equipment receives the downlink control information according to the duration information.

36. The base station according to claim 35, wherein:
the downlink control information does not comprise preset field information, wherein the preset field information is pre-configured by a system; or the preset field information is configured by means of higher layer signaling.

37. The base station according to claim 35 or 36, wherein the downlink control information comprises at least one of the following information:
a quantity of modulation symbols, a time domain spreading factor, time of a single transmission, a quantity of transmission times, and a transport block size.

38. The base station according to any one of claims 35 to 37, wherein if the duration that the downlink control information needs to occupy and that is indicated by the duration information is multiple subframes, the transmitter is specifically configured to send the downlink control information repeatedly in the multiple subframes, wherein each subframe in the multiple subframes comprises entire content of the downlink control information; or the transmitter is specifically configured to send the downlink control information that is divided in the multiple subframes, wherein each subframe in the multiple subframes comprises only partial content of the downlink control information.

39. The base station according to any one of claims 35 to 38, wherein the transmitter is specifically configured to send the duration information to the user equipment on a preset time-frequency resource, wherein the preset time-frequency resource is used to bear the duration information.

40. The base station according to claim 39, wherein the transmitter is specifically configured to send the duration information to the user equipment on the preset time-frequency resource in a frequency domain spread spectrum manner.

41. The base station according to claim 39 or 40, wherein the preset time-frequency resource is further used to bear downlink common control information, wherein the downlink common control information comprises at least one of the following: a system information block, a random access response, and a paging message.

42. The base station according to any one of claims 39 to 41, wherein the preset time-frequency resource is further used to bear a quantity of resource blocks occupied by the downlink control information.

43. The base station according to any one of claims 35 to 42, wherein the processor is further configured to scramble the duration information by using a cell radio network temporary identifier C-RNTI of the user equipment, to obtain scrambled duration information; or scramble the duration information by using a preset common sequence, to obtain scrambled duration information; and
that the transmitter is configured to send the duration information determined by the processor to the user equipment comprises that:
the transmitter is configured to send the scrambled duration information to the user equipment.

44. A user equipment, comprising:
a first receiver, configured to receive duration information sent from a base station, wherein the duration information is used to indicate a duration that downlink control information to be sent to the user equipment needs to occupy; and
a second receiver, configured to receive, according to the duration information received by the first receiver, the downlink control information sent from the base station.

45. The user equipment according to claim 44, wherein the downlink control information does not comprise preset field information, wherein the preset field information is pre-configured by a system; or the preset field information is configured by means of higher layer signaling.

46. The user equipment according to claim 44 or 45, wherein the downlink control information comprises at least one of the following information:
a quantity of modulation symbols, a time domain spreading factor, time of a single transmission, a quantity of transmission times, and a transport block size.

47. The user equipment according to any one of claims 44 to 46, wherein the first receiver is specifically configured to receive the duration information sent on a preset time-frequency resource by the base station, wherein the preset time-frequency resource is used to bear the duration information.

48. The user equipment according to claim 47, wherein the first receiver is specifically configured to receive the duration information sent on the preset time-frequency resource in a frequency domain spread spectrum manner by the base station.

49. The user equipment according to claim 47 or 48, wherein the preset time-frequency resource is further used to bear downlink common control information, wherein the downlink common control information comprises at least one of the following: a system information block, a random access response, and a paging message.

50. The user equipment according to any one of claims 47 to 49, wherein the preset time-frequency resource is further used to bear a quantity of resource blocks occupied by the downlink control information.

51. The user equipment according to any one of claims 44 to 50, wherein the first receiver is specifically configured for the user equipment to receive scrambled duration information sent from the base station, wherein the scrambled duration information is: scrambled duration information obtained by the base station by scrambling the duration information by using a cell radio network temporary identifier C-RNTI of the user equipment; or scrambled duration information obtained by the base station by scrambling the duration information by using a preset common sequence.
